# EUROPEAN PATENT APPLICATION

(11) **EP 1 589 539 A2**
(43) Date of publication of application: **26.10.2005**
(21) Application number: 05008025.8
(22) Date of filing: 13.04.2005
(51) Int. Cl.: G21C 3/332

(54) **Grid insert for the lowermost grid in a fuel assembly**

(30) Priority: 21.04.2004 US 828979
(71) Applicant: Westinghouse Electric Company LLC, Pittsburgh, PA 15230-0355 (US)
(72) Inventor: Hellandbrand, Patrick A. Jr., East Hartford, CT 06118 (US); Martin, Michael L., Simsbury, CT 06070 (US); Broders, Richard P., Granby, CT 06035 (US)
(74) Representative: Gallo, Wolfgang

(57) **Abstract**

A lowermost grid for a nuclear fuel cell includes a grid insert secured therein. The grid insert is a tube having an inwardly projecting retention lip at its lower end. The lowermost grid is secured to a lower nozzle by a mechanical fastener passing through a hole in the lower nozzle, through the grid insert's lower end, where it engages a guide tube, thereby sandwiching the retention lip between the guide tube's end fitting and the lower nozzle. A method of securing the lowermost grid to the lower nozzle is also provided.

## Description

### BACKGROUND OF THE INVENTION

### 1. Field of the Invention

The present invention relates to grid assemblies for fuel assemblies within a nuclear power plant. More specifically, the invention provides a lowermost grid assembly having a grid insert secured therein for removably securing the lowermost grid between the guide tubes and lower nozzle of the fuel assembly.

### 2. Description of the Related Art

A typical fuel assembly for a nuclear reactor has a plurality of fuel rods held in place by a plurality of grids. The grids are distributed along the length of the fuel assembly, and are held in place by guide tubes extending lengthwise through the fuel assembly. The guide tubes are structured to receive devices such as control rods or instrumentation. The top and bottom of the fuel assembly each include a nozzle.

A typical grid includes a first plurality of grid straps substantially parallel to each other, and a second plurality of grid straps substantially parallel to each other and substantially perpendicular to the first grid straps. A perimeter strap surrounds the grid. A plurality of substantially square cells are thereby defined within each grid. Each cell includes one or more springs and one or more dimples which engage the fuel rod, thereby holding it in place within the cell. The grid assembly may also include mixing vanes for the coolant which flows from the bottom to the top of the fuel assembly. The lowermost grid assembly further includes debris-trapping features.

The lowermost grid assembly within the fuel assembly is typically secured to the lower nozzle by a continuous perimeter weld of the perimeter strap of the grid to the lower nozzle. In addition to being time consuming, this method of attachment of the lower nozzle requires that fuel rods be installed after completion of the welding, because there is no access to the fuel rods from the bottom of the fuel assembly once the lower nozzle is in place. Therefore, the fuel rods must be inserted into the fuel assembly by pushing them through the top of the fuel assembly, instead of the preferred method of pulling the fuel rods through from the bottom of the fuel assembly.

Accordingly, there is a need for an apparatus and method of securing the lowermost grid assembly to the lower nozzle of the fuel cell that is simpler, less time consuming and less costly to accomplish. There is a further need for a method of attaching the lower nozzle to the lowermost grid of a fuel assembly that permits installation of the fuel rods into the fuel assembly by pulling them through from the bottom instead of pushing them through from the top.

### SUMMARY OF THE INVENTION

The present invention provides a lowermost grid for a fuel assembly having a grid insert secured therein. The grid insert is structured so that a guide tube may be mechanically secured therein, with a lower nozzle secured to the lower grid assembly and guide tube.

The grid assembly includes a first and second plurality of metal straps, with the first plurality arranged substantially parallel to each other, and the second plurality arranged substantially parallel to each other and substantially perpendicular to the first plurality of metal straps, thereby forming an egg crate pattern of substantially square cells within the grid assembly. Each of the first and second plurality of metal straps have spring and/or dimple elements projecting therefrom into the cells reserved for fuel rods within the matrix, so that a fuel rod may be secured within each of these cells. A plurality of larger cells are provided within the matrix for receiving the guide tubes and an instrument tube.

A grid insert is secured within these larger cells. The grid insert comprises a tube having a retention lip projecting inwardly from its lower end. The grid insert is dimensioned and configured to receive a guide tube therein, with the end of the guide tube abutting the grid insert retention lip. The guide tube itself includes a fashioned lower end for receiving a mechanical fastener therethrough. Fashioned is defined herein as being dimensioned and configured to mate with a mechanical fastener in a secure fashion. An example of a fashioned lower end includes one having a threaded bore for receiving a bolt or screw, or having an end fitting that is so threaded.

The lower nozzle includes an opening corresponding to each of the grid inserts, with one preferred embodiment including an opening corresponding to each corner, and a fifth opening in the center. A mechanical fastener such as a bolt or screw may be passed through the opening, being threadedly secured to the end of the guide tube, and may possibly have a locking disk placed over the screw slot.

By assembling the fuel assembly in this manner, the prior art step of continuous perimeter welding the perimeter strap to the nozzle is avoided. Additionally, the prior continuous perimeter weld required fuel rods to be pushed through the top of the fuel assembly, rather than pulling the fuel rods from the bottom. Once the lower nozzle is welded in place, there is no access to the fuel rods from the bottom of the fuel assembly.

The present invention therefore provides a precise, secure alignment of the lowermost grid to the lower nozzle. The invention further provides a grid insert structured to facilitate securing the grid assembly and lower nozzle together by sandwiching the retention lip of the grid insert between the guide tube end fitting and the lower nozzle when the guide tube is bolted or screwed into place. The invention provides a method of securing the lowermost grid assembly to the lower nozzle that is less expensive, less time-consuming, and simpler than previous methods. The present invention additionally provides a method of assembling a fuel assembly that permits rods to be pulled from the bottom.

Accordingly, it is an object of the present invention to provide a lowermost grid assembly having a grid insert for receiving a guide tube.

It is another object of the present invention to provide a lowermost grid having a grid insert secured within the grid, and having a retention lip that is sandwiched between a guide tube end fitting and the lower nozzle, thereby securing the lowermost grid assembly and lower nozzle together.

It is a further object of the present invention to provide an improved method of securing a lowermost grid to a lower nozzle.

It is another object of the present invention provide a method of assembling a fuel assembly that permits fuel rods to be installed by pulling them from the bottom instead of pushing them in from the top.

It is a further object of the present invention to provide a more efficient, less expensive means for making a fuel assembly.

These and other objects of the invention will become more apparent through the following description and drawings.

### BRIEF DESCRIPTION OF THE DRAWINGS

Figure 1 is a side view of the grid assemblies and guide tubes for a fuel assembly according to the present invention.
Figure 2 is a top view of a lowermost grid assembly according to the present invention.
Figure 3 is a side view of a lowermost grid assembly according to the present invention.
Figure 4 is a top view of a lower nozzle for a fuel assembly according to the present invention.
Figure 5 is a side view of a lower nozzle for a fuel assembly according to the present invention.
Figure 6 is a cross-sectional view taken along the line 6-6 in Figure 4 of a lower nozzle for a fuel assembly according to the present invention.
Figure 7 is a bottom view of a lower nozzle for a fuel assembly according to the present invention.
Figure 8 is a side cross-sectional view of a grid insert for a lowermost grid assembly according to the present invention.
Figure 9 is a partially exploded, partially cut-away view of a lowermost grid assembly having a grid insert of the present invention, along with a guide tube and lower nozzle.
Figure 10 is a cut-away view of a lowermost grid assembly having a grid insert of the present invention, along with a guide tube and lower nozzle.

Like reference numbers denote like elements throughout the drawings.

### DETAILED DESCRIPTION OF THE PREFERRED EMBODIMENTS

The present invention provides a lowermost grid for a fuel cell having a grid insert to facilitate securing the lowermost grid to the fuel assembly's lower nozzle.

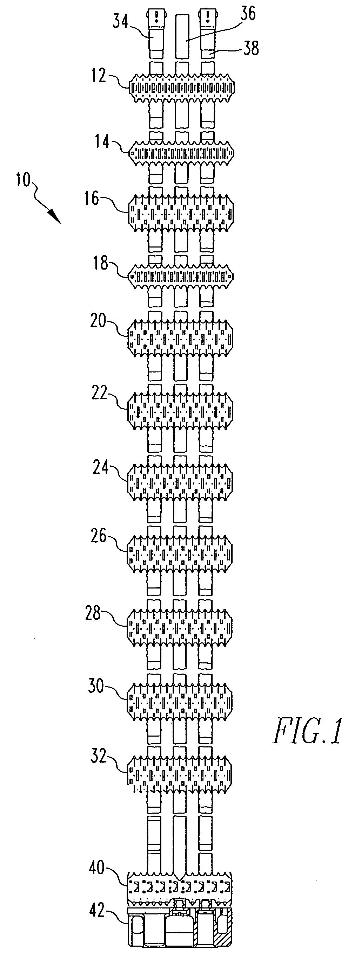

Referring to Figure 1, the support means 10 for the fuel rods within a fuel assembly are illustrated. The support means 10 include a plurality of grid assemblies, for example, the grid assemblies 12-32 in Figure 1. Intermediate grid assemblies 12-32 are secured in place relative to each other by the guide tubes 34, 36, 38. Though only three guide tubes are visible in Figure 1, it will be understood by those skilled in the art that a fourth guide tube is located directly behind guide tube 34, and a fifth guide tube is located directly behind the guide tube 38. It will also be understood by those skilled in the art that a number of guide tubes other than five may be selected, depending on the design of the reactor. The guide tubes 38 are structured to permit the insertion of control rods, instrumentation, or other devices therein. The bottom of the fuel assembly includes a lowermost grid 40, and a lower nozzle 42 secured directly below the lowermost grid 40.

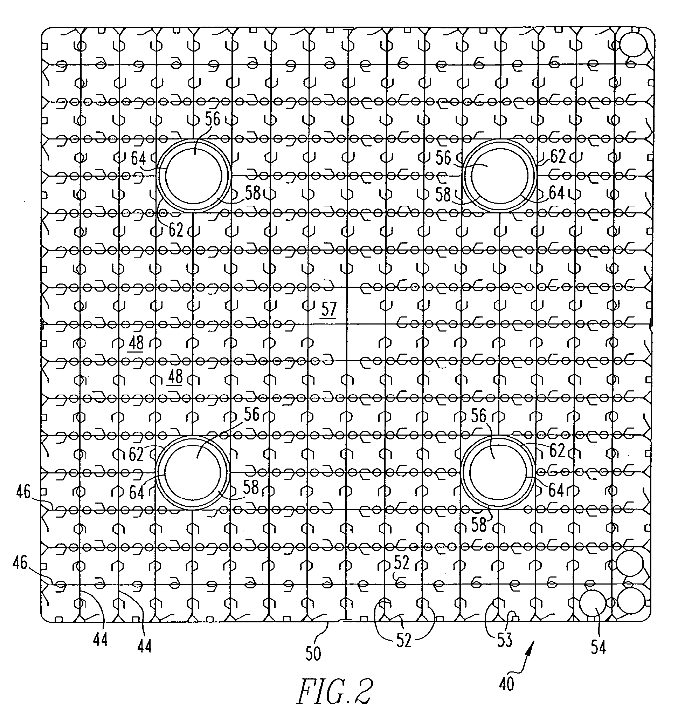

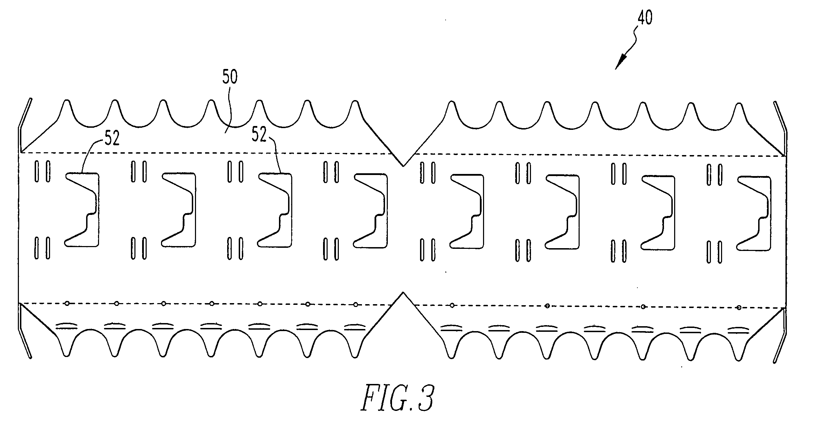

Referring to Figures 2-3, the lowermost grid 40 is illustrated. The lowermost grid assembly 40 includes a first plurality of metal straps 44, with each of the metal straps 44 being substantially parallel to each other, and a second plurality of metal straps 46, with each of the plurality of metal straps 46 being substantially parallel to each other. The intersecting metal straps 44, 46 are interleaved in an egg-crate pattern to form a matrix of substantially square cells 48. The lowermost grid 40 may also include a perimeter strap 50. Each of the straps 44, 46, 50 includes spring elements 52 and dimples 53 protruding into each of the cells 48 adjacent to and defined by that particular strap 44, 46, 50. When a fuel rod 54 is inserted into the cell 48, the spring elements 52 and dimples 53 secure the fuel rod 54 in the desired lateral position relative to the adjacent fuel rods 54. A plurality of larger cells 56,57 are also defined within the lowermost grid 40, with the illustrated example including one cell 56 corresponding to each corner, and one central cell 57. Each of the larger cells 56 is dimensioned and configured to receive a guide tube 34, 36, 38. The cells 56 corresponding to the corners of the fuel assembly 40 each include a grid insert 58.

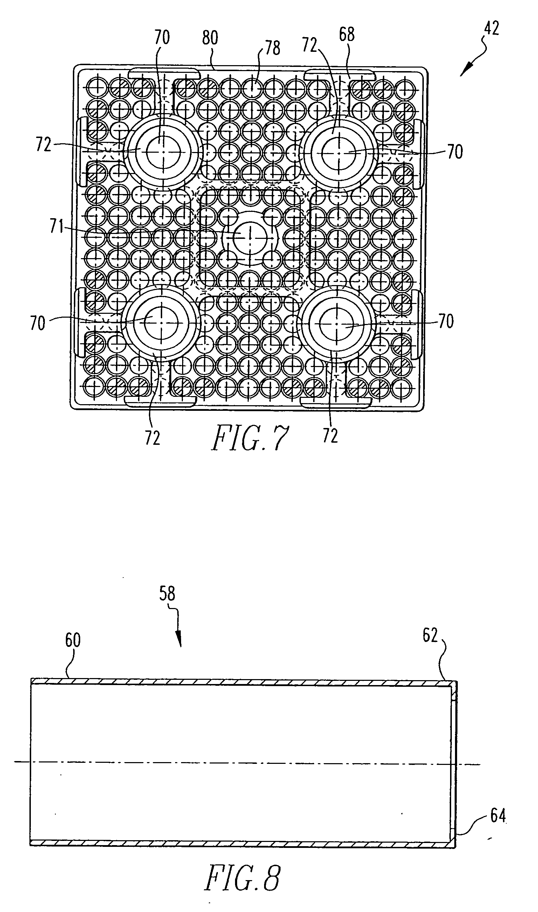

Referring to Figure 8, the grid insert 58 is illustrated. The grid insert 58 is tubular, having a top end 60 and lower end 62. The lower end 62 includes a retention lip 64 depending inwardly about the periphery of the lower end 62. The grid insert 58 may be formed by a punch press, with the die forming the tubing and rolling the bottom lip of the tube to form the retention lip 64. The grid inserts 58 are secured within the cells 56, such as by welding, and more preferably by four intersection welds either at the bottom and/or the top of the grid insert where it mates with the grid strap, with each intersection weld being formed between the grid insert and one of the four grid straps 44,46 forming the cell 56.

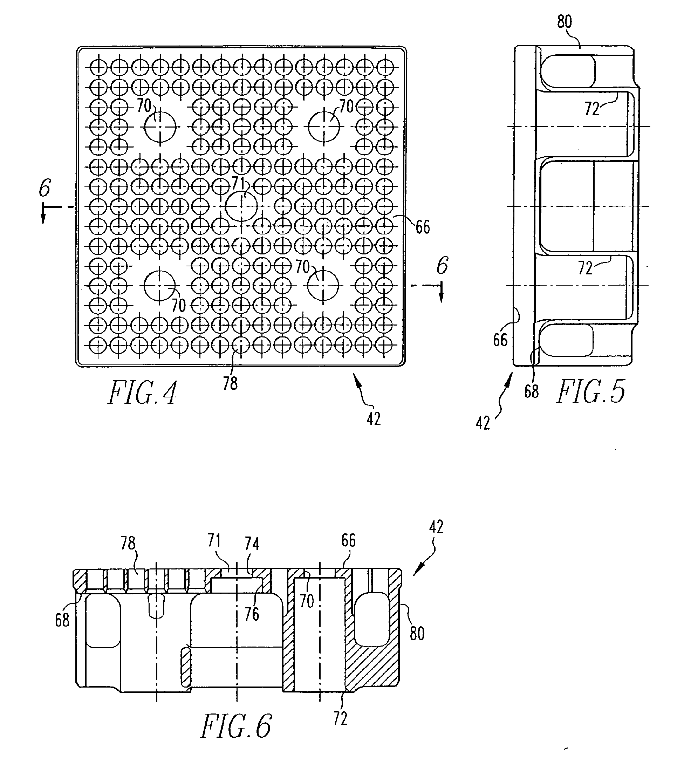

Referring to Figures 4-7, a lower nozzle 42 is illustrated. The lower nozzle 42 includes a top surface 66 and a bottom surface 68. The nozzle 42 defines a plurality of guide tube securing apertures 70 therein, corresponding to the cells 56, and a central aperture 71, corresponding to the cell 57. Each of the apertures 70 is surrounded by a downwardly depending hollow cylinder 72. The central aperture 71 is counterbored, with a smaller diameter top portion 74, and a larger diameter lower portion 76. The lower nozzle 42 also includes a plurality of apertures 78 structured to permit coolant flow therethrough. The lower nozzle 42 further defines a perimeter wall 80 depending downward from the bottom surface 68.

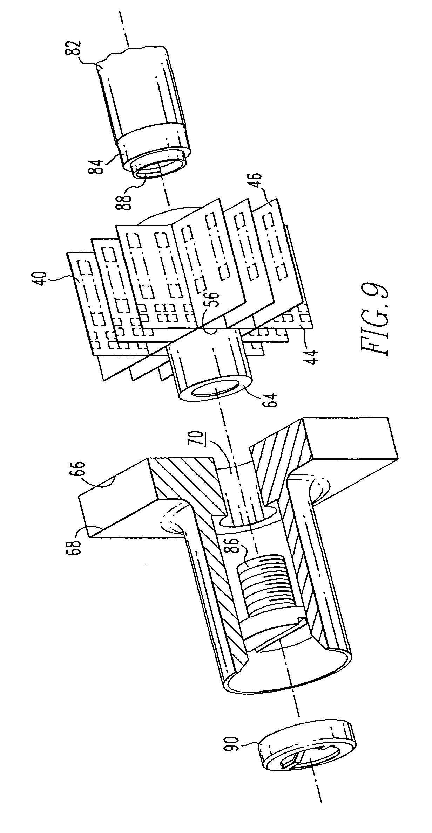

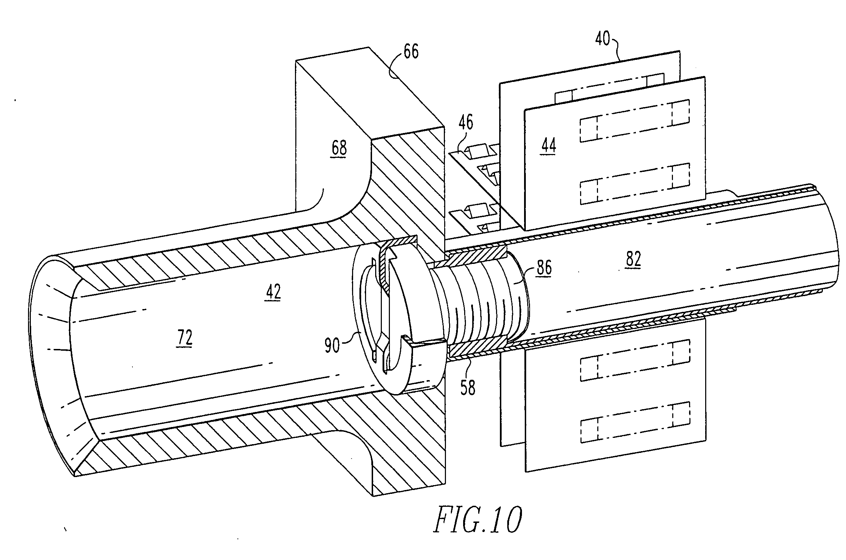

Referring to Figures 9-10, the method of securing the lowermost grid assembly 40 to the lower nozzle 42 is illustrated. The grid insert 58 is secured within the cells 56 of the lowermost grid 40. The guide tube 82 having end fitting 84 is inserted into the grid insert 58 until the end fitting 84 abuts the retention lip 64. A mechanical fastener such as the screw 86 is inserted through the aperture 70 in the lower nozzle 42 and into the threaded bore 88 to be threadedly secured therein, thereby sandwiching the retention lip 64 between the end fitting 84 and lower nozzle 42. A locking disk 90 may then be installed below the screw 86, and welded in place. Although a bolt or screw is illustrated to mechanically secure the retention lip 64 between the guide tube 82 and lower nozzle 42, other mechanical fasteners could be employed for the purpose.

While a specific embodiment of the invention has been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

## Claims

1. A lowermost grid for a fuel assembly, the fuel assembly having a plurality of fuel rods held in place by a plurality of grid assemblies including the lowermost grid assembly and by a plurality of guide tubes, the guide tubes having fashioned lower ends for receiving a mechanical fastener therethrough, the lowermost grid comprising:
a first plurality of grid straps arranged substantially parallel to each other;
a second plurality of grid straps arranged substantially parallel to each other and substantially perpendicular to the first plurality of grid straps, said first and second plurality of grid straps intersecting each other to form a matrix of substantially square-shaped cells;
a perimeter grid strap; and
means for mechanically securing the grid assembly to a lower nozzle of a fuel cell, the means being structured to be sandwiched between a guide tube and the lower nozzle.

2. The lowermost grid according to claim 1, wherein the means for securing the grid assembly to a lower nozzle of a fuel cell comprises a grid insert secured within at least one of the cells, the grid insert being tube-shaped and having an upper end and lower end, the lower end having an internally projecting retention lip disposed thereon, the grid insert being structured to receive a guide tube secured therethrough by a mechanical fastener passing into the bottom end and secured to the guide tube, the retention lip being structured to permit passage of the mechanical fastener but not the guide tube therethrough, whereby the retention lip is held between the guide tube and lower nozzle.

3. The lowermost grid according to claim 2, wherein the grid insert is secured within the cell by welding.

4. The lowermost grid according to claim 3, wherein the grid insert is secured within the cell by an intersection weld with each of the four grid straps forming the cell.

5. The lowermost grid according to claim 1, wherein:
the fashioned lower ends of the guide tubes are threaded; and
the mechanical fastener is selected from the group consisting of a bolt and a screw.

6. A method of assembling a fuel assembly, the method comprising:
providing a first plurality of grid straps arranged substantially parallel to each other;
providing a second plurality of grid straps arranged substantially parallel to each other and substantially perpendicular to the first plurality of grid straps, said first and second plurality of grid straps intersecting each other to form a matrix of substantially square-shaped cells;
providing a perimeter grid strap; and
providing a grid insert secured within at least one of the cells, the grid insert being tube-shaped and having an upper end and lower end, the lower end having an internally projecting retention lip disposed thereon, the grid insert being structured to receive a guide tube secured therethrough by a mechanical fastener passing into the bottom end and secured to the guide tube.

7. The method according to claim 6, wherein the grid insert is secured within the cell by welding.

8. The method according to claim 7, wherein the grid insert is welded within the cell by an intersection weld with each of the four grid straps forming the cell.

9. The method according to claim 6, further comprising:
providing a plurality of intermediate grid assemblies, each intermediate grid assembly having a first plurality of grid straps arranged substantially parallel to each other, and a second plurality of grid straps arranged substantially parallel to each other and substantially perpendicular to the first plurality of grid straps, said first and second plurality of grid straps intersecting each other to form a matrix of substantially square-shaped cells;
providing a guide tube secured within each grid insert by a mechanical fastener passing into the bottom end and secured to the guide tube; and
installing a plurality of fuel rods within the cells of the lowermost grid and the intermediate grids by pulling the fuel rods through from the bottom of the fuel assembly.

10. The method according to claim 6, further comprising:
providing internal threads within a lower end of the guide tubes; and
wherein the mechanical fastener is a bolt or screw.

11. A fuel assembly, comprising:
a plurality of guide tubes having fashioned lower ends;
a lowermost grid assembly, having
a first plurality of grid straps arranged substantially parallel to each other;
a second plurality of grid straps arranged substantially parallel to each other and substantially perpendicular to the first plurality of grid straps, said first and second plurality of grid straps intersecting each other to form a matrix of substantially square-shaped cells;
a perimeter grid strap; and
means for securing the grid assembly to a lower nozzle of a fuel cell, the means being structured to be sandwiched between one of the guide tubes and the lower nozzle; and
a plurality of intermediate grid assemblies, each intermediate grid assembly having:
a first plurality of grid straps arranged substantially parallel to each other; and
a second plurality of grid straps arranged substantially parallel to each other and substantially perpendicular to the first plurality of grid straps, said first and second plurality of grid straps intersecting each other to form a matrix of substantially square-shaped cells, and
a plurality of fuel rods held in place by the lowermost grid assembly and the intermediate grid assemblies.
